# EUROPÄISCHE PATENTSCHRIFT

(11) **EP 1 859 909 B1**
(45) Veröffentlichungstag und Bekanntmachung des Hinweises auf die Patenterteilung: **24.09.2008**
(21) Anmeldenummer: 07108232.5
(22) Anmeldetag: 15.05.2007
(51) Int. Cl.: B25J 15/04, B25J 19/00

(54) **Werkzeug-Wechselvorrichtung für Robotersysteme**
Tool exchange device for robotic systems
Dispositif de changement d'outil pour systèmes robotisés

(30) Priorität: 22.05.2006 DE 202006008230 U
(43) Veröffentlichungstag der Anmeldung: 28.11.2007
(73) Patentinhaber: Nimak GmbH, 57537 Wissen (DE)
(72) Erfinder: Nickel, Paul, 57537 Wissen (DE)
(74) Vertreter: Patentanwälte Dr. Solf & Zapf

(56) Entgegenhaltungen:
- DE-A1- 3 705 123
- DE-A1- 19 917 068
- DE-U1- 29 922 796

## Beschreibung

Die vorliegende Erfindung betrifft eine Werkzeug-Wechselvorrichtung für Robotersysteme, insbesondere für Schweißroboter, mit zwei Kupplungsplatten, die mit ihren Rückseiten einerseits mit einem Roboter und andererseits mit einem Werkzeug zu verbinden sind, und die miteinander in einer parallelen Anordnung mit ihren einander zugewandten Kupplungsseiten mechanisch über eine Dreipunkt-Verriegelung lösbar verbindbar sind, wobei an die Kupplungsplatten Anschluss- und Verbindermittel für elektrische, hydraulische und/oder pneumatische Verbindungsleitungen montiert oder montierbar sind.

Eine derartige Wechselvorrichtung ist in der DE 37 05 123 A1 beschrieben. Bei den beiden Kupplungsplatten handelt es sich um verschiedene, individuell an die jeweilige Anschluss-Seite angepasste Teile. Die Platten weisen im Bereich ihrer Kupplungsflächen Verbinderteile für elektrische Leitungen und für Fluid-Leitungen auf. Die Verbinderteile sitzen versenkt in individuell verschiedenen Ausnehmungen der Platten, und auch ihre Anschlüsse führen zu einer speziell angepassten, unterschiedlichen Ausgestaltung beider Platten. Durch die versenkte Anordnung der Verbinderteile und durch die daraus resultierenden Materialschwächungen müssen zudem die Platten relativ dick ausgelegt sein, um die erforderliche Stabilität zur Aufnahme der im Betrieb auftretenden Kräfte und Momente zu gewährleisten. Alle diese Umstände führen auch zu recht hohen Kosten.

Der vorliegenden Erfindung liegt die Aufgabe zu Grunde, eine Wechselvorrichtung der genannten Art zu schaffen, die besonders kompakt und kostengünstig ist, dabei aber dennoch eine gute Stabilität sowie auch eine hohe Variabilität zur Anpassung an unterschiedliche Anwendungen gewährleistet.

Erfindungsgemäß wird dies durch die Merkmale des Anspruchs 1 erreicht. Vorteilhafte Ausgestaltungsmerkmale der Erfindung sind in den abhängigen Ansprüchen enthalten.

Demnach sind erfindungsgemäß beide Kupplungsplatten identisch und mit einer im Wesentlichen dreieckigen Grundform ausgebildet. Dabei bedeutet "im Wesentlichen dreieckig", dass nicht nur geradlinige, sondern auch konvex und/oder konkav gekrümmte Seiten möglich sind, wobei die Ecken bevorzugt abgerundet sein können. Für die Verriegelungselemente der Dreipunkt-Verriegelung sind in Eckbereichen der Kupplungsplatten Haltebereiche angeordnet. Als Anschluss- und Verbindermittel sind gesonderte Verbinderteile in Haltebereichen an den Seitenrändern der Kupplungsplatten befestigbar. Bevorzugt sind die Verbinderteile mit Halteabschnitten jeweils in einem Randbereich der zugehörigen Kupplungsplatte an dieser so befestigbar, dass sie mit Verbindungsabschnitten seitlich von den Kupplungsplatten ausserhalb der dreieckigen Grundform vorstehend angeordnet sind. Dadurch bleibt der mittige Flächenbereich der Kupplungsplatten frei, so dass dieser Freiraum bei Bedarf auch für sonstige Zwecke genutzt werden kann, z. B. für Leitungsdurchführungen. Durch die periphere Anordnung der Verbinderteile werden zudem Schwächungen der Platten durch Ausnehmungen vermieden, so dass eine relativ geringere Dicke der Platten für eine hinreichend große Stabilität ausreicht. Durch die geringe Plattendicke wird eine vorteilhaft geringe Aufbau-Höhe, d. h. eine insgesamt kompakte Bauform erreicht. Die Verbinderteile der beiden Kupplungsplatten sind jeweils als paarweise zueinander komplementäre Steckverbinder ausgebildet, die jeweils eigene Leitungsanschlüsse aufweisen. Die Anschlüsse und die zugehörigen Leitungsverbindungen haben somit vorteilhafterweise keinen Einfluss auf die Ausgestaltung der Kupplungsplatten. Die als Steckverbinder ausgebildeten Verbinderteile definieren Trennebenen, die bevorzugt mit einer zwischen den Kupplungsplatten definierten Trennebene im Wesentlichen zusammenfallen.

Die identisch ausgebildeten Kupplungsplatten können auf einfache und wirtschaftliche Weise hergestellt und mit den jeweils erforderlichen Teilen bestückt werden. Dies erlaubt auch eine hohe Variabilität zur Anpassung an verschiedenartige Anwendungsfälle. Durch die besondere, radialsymmetrische Ausgestaltung wird eine günstige, statisch bestimmte Kraftverteilung erreicht; so wird im mittleren Plattenbereich ein Biegemoment weitgehend vermieden (Biegemoment praktisch gleich Null).

Weitere vorteilhafte Ausgestaltungen der Erfindung werden auch in der folgenden Beschreibung noch genauer erläutert werden.

Anhand eines in der Zeichnung veranschaulichten, bevorzugten Ausgestaltungsbeispiels soll die Erfindung genauer erläutert werden. Dabei zeigen:
- Fig. 1: eine Perspektivansicht einer erfindungsgemäßen WerkzeugWechselvorrichtung in einem gesonderten, von einem Roboter und einem Werkzeug getrennten Zustand und mit Blickrichtung auf die werkzeugseitige Anschlussseite,
- Fig. 2: eine weitere Perspektivansicht ähnlich Fig. 1 auf die roboterseitige Anschlussseite,
- Fig. 3: eine Seitenansicht in Pfeilrichtung III gemäß Fig. 1 bzw. gemäß Fig. 4,
- Fig. 4: eine Draufsicht auf die Werkzeugseite in Pfeilrichtung IV gemäß Fig. 1 und 3,
- Fig. 5: eine Draufsicht auf die Roboterseite in Pfeilrichtung V gemäß Fig. 2 und 3,
- Fig. 6: einen Schnitt durch die Wechselvorrichtung in der Ebene A-A gemäß Fig. 4 und
- Fig. 7: eine Perspektivansicht einer gesonderten Kupplungsplatte ohne daran befestigte Bestandteile.

In den verschiedenen Figuren der Zeichnung sind gleiche Teile stets mit den gleichen Bezugszeichen versehen.

Eine erfindungsgemäße Werkzeug-Wechselvorrichtung 1 weist als tragende Bestandteile zwei Kupplungsplatten 2, 4 auf. Jede Kupplungsplatte 2, 4 weist eine Kupplungsseite 6 und eine gegenüberliegende Rückseite 8 auf. Die eine Kupplungsplatte 2 ist mit ihrer Rückseite 8 mit einem nicht dargestellten Roboter bzw. Roboterarm zu verbinden. Die andere Kupplungsplatte 4 ist mit ihrer Rückseite 8 mit einem ebenfalls nicht dargestellten Werkzeug zu verbinden. Beide Kupplungsplatten 2, 4 sind miteinander in einer parallelen Anordnung mit ihren einander zugewandten Kupplungsseiten 6 mechanisch über eine Dreipunkt-Verriegelung lösbar verbindbar, wozu drei Verriegelungselemente 10 vorgesehen sind, die im Folgenden noch genauer erläutert werden. Weiterhin sind an den Kupplungsplatten 2, 4 Anschluss- und Verbindermittel 12 für elektrische, hydraulische und/oder pneumatische Verbindungsleitungen zu befestigen.

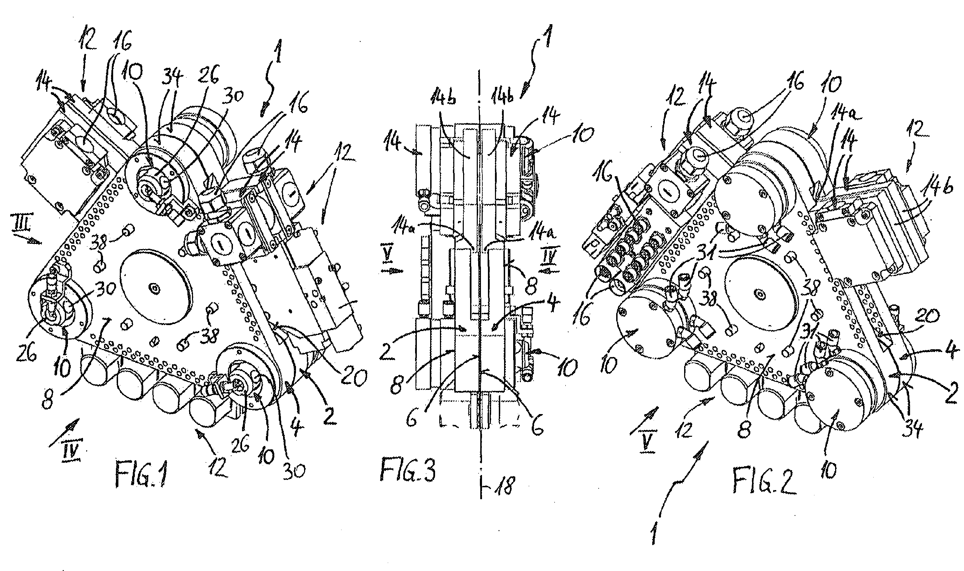

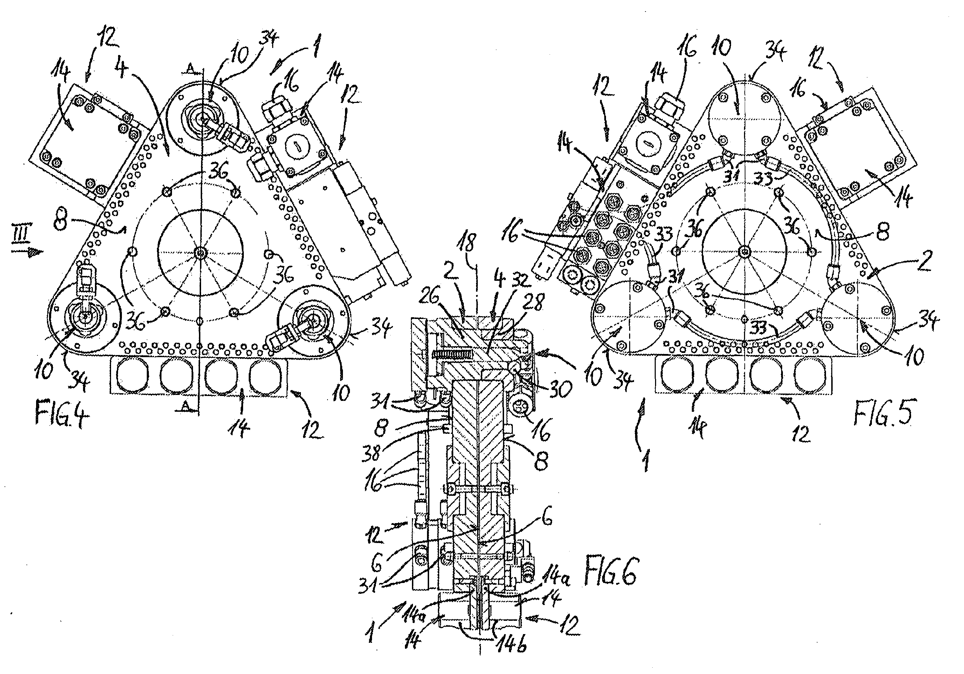

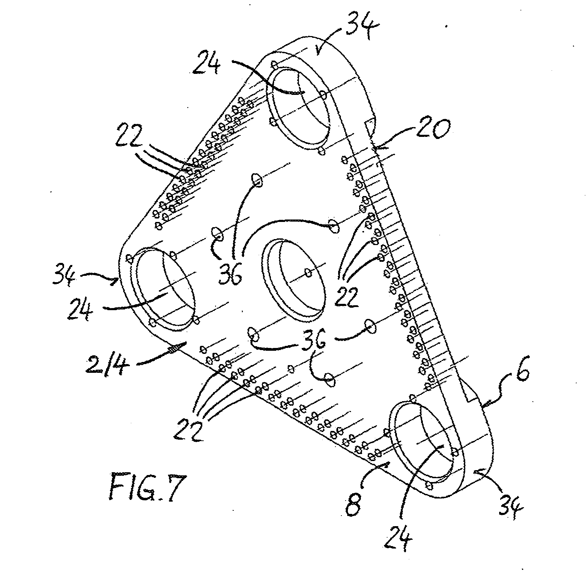

Erfindungsgemäß sind beide Kupplungsplatten 2, 4 identisch und mit einer im Wesentlichen dreieckigen Grundform ausgebildet. Hierzu wird auch auf die gesonderte Darstellung in Fig. 7 hingewiesen. Dabei sind die drei Verriegelungselemente 10 der Dreipunkt-Verriegelung in Eckbereichen der Kupplungsplatten 2, 4 anzuordnen. Als Anschluss- und Verbindermittel 12 sind gesonderte Verbinderteile 14 in Randbereichen der Kupplungsplatten 2, 4 zu befestigen. Dazu werden die Verbinderteile 14 mit Halteabschnitten 14a jeweils in einem Randbereich der zugehörigen Kupplungsplatte 2 bzw. 4 an dieser so befestigt, dass sie mit Verbindungsabschnitten 14b seitlich von den Kupplungsplatten 2, 4 ausserhalb der dreieckigen Grundform vorstehend angeordnet sind. Somit liegen die Verbinderteile 14 mit ihren Verbindungsabschnitten 14b im verbundenen Zustand seitlich ausserhalb der Kupplungsplatten 2, 4 (siehe Fig. 1, 2, 4 und 5). Die Verbinderteile 14 sind jeweils als paarweise zueinander komplementäre Steckverbinder ausgebildet, die jeweils eigene Leitungsanschlüsse 16 aufweisen. Wie sich insbesondere aus Fig. 3 und 6 ergibt, weisen die Verbinderteile 14 Trennebenen auf, die mit einer zwischen den Kupplungsplatten 2, 4 definierten Trennebene 18 im Wesentlichen zusammenfallen.

Wie sich insbesondere aus Fig. 7 ergibt, weist jede Kupplungsplatte 2, 4 in ihrem Randbereich, insbesondere im Bereich jeder ihrer drei Dreieck-Seiten, gleichartige Ausnehmungen 20 zur Aufnahme der Halteabschnitte 14a der Verbinderteile 14 auf. Diese Ausnehmungen 20 sind auch in den Perspektivansichten in Fig. 1 und 2 erkennbar. Jede Kupplungsplatte 2, 4 weist im Bereich jeder Ausnehmung 20 bevorzugt eine Vielzahl von Montagelöchern 22 zur universellen Befestigung verschiedenartiger Verbinderteile 14 auf. Die Ausnehmungen 20 sind vorzugsweise auf den einander zugewandten Kupplungsseiten 6 der Kupplungsplatten 2, 4 angeordnet und jeweils als rechtwinklige, zur Kupplungsseite 6 und seitlich nach außen randoffene Nut ausgebildet. Dies ermöglicht eine sehr gute Zugänglichkeit für die Montage.

Wie sich weiterhin aus Fig. 7 ergibt, weisen die Kupplungsplatten 2, 4 in den Eckbereichen Öffnungen 24 zur Montage der Verriegelungselemente 10 der Dreipunkt-Verriegelung auf. Wie sich insbesondere aus Fig. 6 ergibt, sind in den Öffnungen 24 der einen Kupplungsplatte 2 Verriegelungsstecker 26 und in den Öffnungen 24 der anderen Kupplungsplatte 4 buchsenartige Aufnahmen 28 für die Verriegelungsstecker 26 zu befestigen. Als Verriegelungselemente 10 sind an sich bekannte Kugelverriegelungen vorgesehen, wobei jeder Verriegelungsstecker 26 radial bewegliche Sperrkugeln 30 (Fig. 6) aufweist, die nach dem Einstecken in die zugehörige Aufnahme 28 deren hinteren Öffnungsrand radial hintergreifen, indem sie durch einen beweglichen Stößel 32 radial nach außen bewegt und verriegelt werden. Der Stößel 32 kann mit einem Druckmittel (pneumatisch oder hydraulisch) betätigt werden. Dazu weisen die Verriegelungsstecker 26 auf der Rückseite 8 der Kupplungsplatte 2 (siehe Fig. 2 und 5) Druckmittelanschlüsse 31 mit angeschlossenen Leitungen 33 auf. Die Leitungen 33 können - wie dargestellt - über die rückseitige Plattenfläche geführt sein oder aber ausserhalb der Plattenbegrenzung verlaufen. Einzelheiten der Kugel-Verriegelungselemente 10 sind auch in der eingangs schon erwähnten DE 37 05 123 A1 beschrieben; hierauf wird Bezug genommen.

In der dargestellten, bevorzugten Ausführung weisen die Kupplungsplatten 2, 4 jeweils die Flächenform eines gleichseitigen, regelmäßigen Dreiecks, vorzugsweise mit abgerundeten Ecken 34 auf. Jede Kupplungsplatte 2, 4 weist weiterhin in ihrem inneren Flächenbereich Montageelemente 36 zur mechanischen Verbindung mit dem Roboter bzw. mit dem Werkzeug auf. Dabei handelt es sich insbesondere um sechs Montagelöcher, die auf einem Kreis um den Mittelpunkt des Dreiecks verteilt angeordnet sind. In jedem Montageloch kann gemäß Fig. 1 bis 3 ein Haltebolzen (Gewindebolzen) 38 befestigt sein.

Die Erfindung ist nicht auf die dargestellten und beschriebenen Ausführungsbeispiele beschränkt, sondern umfaßt auch alle durch die Ansprüche definierten Ausführungen.

## Patentansprüche

1. Werkzeug-Wechselvorrichtung (1) für Robotersysteme, insbesondere für Schweißroboter, mit zwei Kupplungsplatten (2, 4), die mit ihren Rückseiten (8) einerseits mit einem Roboter und andererseits mit einem Werkzeug zu verbinden sind, und die miteinander in einer parallelen Anordnung mit ihren einander zugewandten Kupplungsseiten (6) mechanisch über eine Dreipunkt-Verriegelung lösbar verbindbar sind, wobei an die Kupplungsplatten (2, 4) Anschluss- und Verbindermittel (12) für elektrische, hydraulische und/oder pneumatische Verbindungsleitungen montierbar sind,
**dadurch gekennzeichnet, dass** beide Kupplungsplatten (2, 4) identisch und mit einer im Wesentlichen dreieckigen Grundform ausgebildet sind, wobei Haltebereiche für Verriegelungselemente (10) der Dreipunkt-Verriegelung in Eckbereichen der Kupplungsplatten (2, 4) sowie Haltebereiche für separate Verbinderteile (14) der Anschluss- und Verbindermittel (12) in Seitenrandbereichen der Kupplungsplatten (2, 4) angeordnet sind.

2. Werkzeug-Wechselvorrichtung nach Anspruch 1,
**dadurch gekennzeichnet, dass** dieVerbinderteile(14)mit Halteabschnitten (14a) jeweils in einem Randbereich der zugehörigen Kupplungsplatte (2, 4) an dieser befestigbar und mit Verbindungsabschnitten (14b) seitlich von den Kupplungsplatten (2, 4) vorstehend anzuordnen sind.

3. Werkzeug-Wechselvorrichtung nach Anspruch 1 oder 2,
**dadurch gekennzeichnet, dass** die Verbinderteile (14) der beiden Kupplungsplatten (2, 4) jeweils als paarweise zueinander komplementäre Steckverbinder ausgebildet sind, die jeweils eigene Leitungsanschlüsse (16) aufweisen, und die vorzugsweise bezüglich ihrer Trennebenen mit einer zwischen den Kupplungsplatten (2, 4) definierten Trennebene (18) im Wesentlichen zusammenfallen.

4. Werkzeug-Wechselvorrichtung nach Anspruch 2 oder 3,
**dadurch gekennzeichnet, dass** jedeKupplungsplatte(2,4)in ihrem Randbereich, insbesondere im Bereich von drei Dreieck-Seiten, gleichartige Ausnehmungen (20) zur Aufnahme der Halteabschnitte (14a) der Verbinderteile (14) aufweist, wobei jede Kupplungsplatte (2, 4) im Bereich jeder Ausnehmung (20) vorzugsweise eine Vielzahl von Montagelöchern (22) aufweist.

5. Werkzeug-Wechselvorrichtung nach Anspruch 4,
**dadurch gekennzeichnet, dass** die Ausnehmungen (20) auf den einander zugewandten Kupplungsseiten (6) der Kupplungsplatten (2, 4) angeordnet und jeweils als rechtwinklige, zur Kupplungsseite (6) und seitlich nach außen randoffene Nut ausgebildet sind.

6. Werkzeug-Wechselvorrichtung nach einem der Ansprüche 1 bis 5,
**dadurch gekennzeichnet, dass** die Kupplungsplatten (2, 4) in den Eckbereichen Öffnungen (24) für die Verriegelungselemente (10) der Dreipunkt-Verriegelung aufweise, wobei in den Öffnungen (24) der einen Kupplungsplatte (2) Verriegelungsstecker (26) und in den Öffnungen (24) der anderen Kupplungsplatte (4) Aufnahmen (28) für die Verriegelungsstecker (26) gehalten oder befestigbar sind.

7. Werkzeug-Wechselvorrichtung nach einem der Ansprüche 1 bis 6,
**dadurch gekennzeichnet, dass** dieKupplungsplatten(2,4) jeweils die Flächenform eines gleichseitigen Dreiecks vorzugsweise mit abgerundeten Ecken (34) aufweisen.

8. Werkzeug-Wechselvorrichtung nach einem der Ansprüche 1 bis 7,
**dadurch gekennzeichnet, dass** jedeKupplungsplatte(2,4)in ihrem inneren Flächenbereich Montageelemente (36) zur mechanischen Verbindung mit dem Roboter bzw. dem Werkzeug aufweist.

## Claims

1. A tool changing device (1) for robot systems, in particular for welding robots, with two coupling plates (2, 4) which are to be connected by their rear sides (8) firstly to a robot and secondly to a tool, and which can be detachably connected together in a parallel arrangement with their coupling sides (6) which face one another mechanically via a three-point locking means, with attachment and connector means (12) for electrical, hydraulic and/or pneumatic connecting lines being able to be mounted on the coupling plates (2, 4),
**characterised in that** both coupling plates (2, 4) are formed identically and with a substantially triangular basic shape, with holding regions for locking elements (10) of the three-point locking means being arranged in corner regions of the coupling plates (2, 4) and also holding regions for separate connector parts (14) of the attachment and connector means (12) being arranged in lateral marginal regions of the coupling plates (2,4).

2. A tool changing device according to Claim 1, **characterised in that** the connector parts (14) with holding sections (14a) can be fastened in each case to the associated coupling plate (2, 4) in a marginal region thereof and are to be arranged with connecting sections (14b) projecting laterally from the coupling plates (2, 4).

3. A tool changing device according to Claim 1 or 2, **characterised in that** the connector parts (14) of the two coupling plates (2, 4) are each formed as plug connectors which are complementary to one another in pairs, which each have their own line connections (16), and which preferably substantially coincide in terms of their parting planes with a parting plane (18) defined between the coupling plates (2, 4).

4. A tool changing device according to Claim 2 or 3, **characterised in that** each coupling plate (2, 4) has in its marginal region, in particular in the region of three triangle sides, recesses (20) of the same type for receiving the holding sections (14a) of the connector parts (14), each coupling plate (2, 4) having in the region of each recess (20) preferably a plurality of mounting holes (22).

5. A tool changing device according to Claim 4, **characterised in that** the recesses (20) are arranged on the coupling sides (6) of the coupling plates (2, 4) which face one another, and are formed in each case as a right-angled groove which is open at the edges on the coupling side (6) and laterally outwards.

6. A tool changing device according to one of Claims 1 to 5, **characterised in that** the coupling plates (2, 4) have in the corner regions openings (24) for the locking elements (10) of the three-point locking means, with locking plugs (26) being held or being able to be fastened in the openings (24) in one coupling plate (2), and holders (28) for the locking plugs (26) in the openings (24) in the other coupling plate (4).

7. A tool changing device according to one of Claims 1 to 6, **characterised in that** the coupling plates (2, 4) each have the surface form of an equilateral triangle preferably with rounded-off corners (34).

8. A tool changing device according to one of Claims 1 to 7, **characterised in that** each coupling plate (2, 4) has in its inner surface region mounting elements (36) for mechanical connection to the robot or the tool.

## Revendications

1. Dispositif de changement d'outil (1) pour systèmes robotisés, en particulier pour des robots de soudage, ce dispositif comportant deux plaques d'accouplement (2, 4) qui sont à relier avec leurs côtés arrière (8) d'une part à un robot et d'autre part à un outil, et qui peuvent être reliées mécaniquement de manière amovible entre elles dans une disposition parallèle avec leurs côtés d'accouplement (6) tournés l'un vers l'autre par le biais d'un verrouillage à trois points, des moyens de raccordement et de liaison (12) pouvant être montés sur les plaques d'accouplement (2, 4) pour des lignes de jonction électriques, hydrauliques et/ou pneumatiques,
**caractérisé en ce que** les deux plaques d'accouplement (2, 4) sont réalisées de manière identique et présentant une forme de base essentiellement triangulaire, des zones de retenue pour des éléments de verrouillage (10) du verrouillage à trois points étant disposées dans des zones angulaires des plaques d'accouplement (2, 4) ainsi que des zones de retenue pour des parties de liaison (14) séparées des moyens de raccordement et de liaison (12) étant disposées dans des zones de bord latéral des plaques d'accouplement (2, 4).

2. Dispositif de changement d'outil selon la revendication 1, **caractérisé en ce que** les parties de liaison (14) présentant des sections de retenue (14a) peuvent être fixées respectivement dans une zone de bord de la plaque d'accouplement (2, 4) afférente sur celle-ci et sont à disposer avec des sections de liaison (14b) de manière à dépasser latéralement des plaques d'accouplement (2, 4).

3. Dispositif de changement d'outil selon la revendication 1 ou 2, **caractérisé en ce que** les parties de liaison (14) des deux plaques d'accouplement (2, 4) sont réalisées respectivement comme des connecteurs enfichables complémentaires par paires l'un par rapport à l'autre, lesquels présentent respectivement leurs propres jonctions (16), et coïncident essentiellement de préférence par rapport à leurs plans de séparation avec un plan de séparation (18) défini entre les plaques d'accouplement (2, 4).

4. Dispositif de changement d'outil selon la revendication 2 ou 3, **caractérisé en ce que** chaque plaque d'accouplement (2, 4) présente dans sa zone de bord, en particulier dans la zone des trois côtés de la forme triangulaire, des évidements (20) similaires pour recevoir des sections de retenue (14a) des parties de liaison (14), chaque plaque d'accouplement (2, 4) présentant dans la zone de chaque évidement (20) de préférence une pluralité de trous de montage (22).

5. Dispositif de changement d'outil selon la revendication 4, **caractérisé en ce que** les évidements (20) sont disposés sur les côtés d'accouplement (6) tournés les uns vers les autres des plaques d'accouplement (2, 4) et sont réalisés respectivement comme une rainure à angles droits, ouverte sur le bord vers le côté d'accouplement (6) et latéralement vers l'extérieur.

6. Dispositif de changement d'outil selon l'une quelconque des revendications 1 à 5, **caractérisé en ce que** les plaques d'accouplement (2, 4) présentent dans les zones angulaires des ouvertures (24) pour les éléments de verrouillage (10) du verrouillage à trois points, des connecteurs de verrouillage (26) étant maintenus ou pouvant être fixés dans les ouvertures (24) d'une plaque d'accouplement (2), des logements (28) pour les connecteurs de verrouillage (26) étant maintenus ou pouvant être fixés dans les ouvertures (24) de l'autre plaque d'accouplement (4).

7. Dispositif de changement d'outil selon l'une quelconque des revendications 1 à 6, **caractérisé en ce que** les plaques d'accouplement (2, 4) présentent respectivement la forme plane d'un triangle équilatéral de préférence avec des angles (34) arrondis.

8. Dispositif de changement d'outil selon l'une quelconque des revendications 1 à 7, **caractérisé en ce que** chaque plaque d'accouplement (2, 4) présente dans sa zone de surface intérieure des éléments de montage (36) pour la liaison mécanique avec le robot ou l'outil.
